# EUROPÄISCHE PATENTSCHRIFT

(11) **EP 0 414 854 B1**
(45) Veröffentlichungstag und Bekanntmachung des Hinweises auf die Patenterteilung: **08.12.1993**
(21) Anmeldenummer: 90903147.8
(22) Anmeldetag: 20.02.1990
(51) Int. Cl.: G01M 3/18, H01B 7/32

(54) **KABEL ZUR ORTUNG VON FLÜSSIGKEITEN**
LIQUID-DETECTING CABLE
CABLE DE REPERAGE DE LIQUIDES

(30) Priorität: 22.02.1989 DE 8902073 U
(43) Veröffentlichungstag der Anmeldung: 06.03.1991
(73) Patentinhaber: Kabelwerke Reinshagen GmbH, D-42369 Wuppertal (DE)
(72) Erfinder: TAUSCH, Norbert, D-5650 Solingen 25 (DE); DIEGMANN, Wolfgang, D-5600 Wuppertal 1 (DE)
(74) Vertreter: Priebisch, Rüdiger, Dipl.-Ing., Dipl.-Wirtsch.-Ing. (FH)
(86) Internationale Anmeldenummer: DE9000114
(87) Internationale Veröffentlichungsnummer: WO9010209

(56) Entgegenhaltungen:
- EP-A- 0 093 025
- EP-A- 0 144 211
- EP-A- 0 253 085
- EP-A- 0 262 667
- US-A- 4 594 638

## Beschreibung

Die Erfindung betrifft ein Kabel zur Ortung von Flüssigkeiten mittels elektrischer Widerstandsmessung. Derartige Kabel werden eingesetzt zur Überwachung von verschiedensten Flüssigkeiten, wie z. B. Oelen, Treibstoffen, Chemikalien und dergleichen.

Aus der EP-A-0144211 ist ein Kabel mit den Merkmalen der Präambel des Patentanspruchs 1 bekannt.

Aus der EP-A-0262667 ist es bekannt, daß eine isolierende Trennschicht in der zu selektierenden Flüssigkeit in Lösung geht. Auch die Verwendung von zusätzlichen Trensen zum Aufbau eines runden Verseilelements ist hieraus vorbekannt sowie die Ausbildung einer flüssigkeitsdurchlässigen, isolierenden Umhüllung in Form eines offenen Geflechts.

Aus der EP-A-0253085 ist es bekannt, daß eine Trennschicht mit der zu selektierenden Flüssigkeit eine chemische Reaktion eingeht. Desweiteren sind daraus leitfähige Polymere bekannt, die als leitfähigen Füllstoff auch Ruß (carbon black) beinhalten können. Auf die Möglichkeit, weitere Adern für weitere Meßzwecke anzuordnen, ist ebenfalls hingewiesen.

Schließlich ist es aus der US-A-4594638 bekannt, die Elemente solcher Kabel auch koaxial übereinander anzuordnen.

Aus der EP-A-093 025 ist ein sensor zur Überwachung von Rohren bekannt, bei dem ein Sensorleiter als Karbonfaser ausgebildet ist, die wendelförmig in der zu überwachender Rohrwand eingebettet ist.

Der Erfindung liegt das Bestreben zugrunde, ein Kabel der genannten Art so zu gestalten, daß es auf verschiedene Arten von Flüssigkeiten anspricht. Darüber hinaus sollte es meßtechnisch einfach zu betreiben sein.

Diese Bedingungen erfüllt die Erfindung dadurch, daß mindestens drei im wesentlichen längslaufende, elektrisch leitende Kabelelemente angeordnet sind, von denen ein erstes als isolierter Speiseleiter, ein zweites als für die zu detektierende Flüssigkeit zugänglicher Sensorleiter und ein drittes als für die zu detektierende Flüssigkeit zugänglicher Widerstandsleiter ausgebildet ist, daß der zweite und dritte Leiter durch ihre räumliche Zuordnung zueinander elektrisch isoliert voneinander angeordnet sind, jedoch dazwischen angeordnete Teile des Kabels für die zu detektierende Flüssigkeit leicht durchlässig sind, wobei der Sensorleiter eine mit leitfähigem Polymer umspritzte Kupferlitze ist und der Widerstandsleiter als mit leitfähigem Polymer umspritzte Karbonfaser ausgebildet ist, und die Karbonfaser au einem Garn mit 200 tex und ca. 200 Schlägen/m besteht, so daß sich ein Garn-Durchmesser von 0,38 mm ergibt.

Es kann auch eine Trennschicht zwischen dem zweiten und dem dritten Leiter vorgesehen sein, die unbenetzt elektrisch isolierend ist, jedoch in der zu detektierenden Flüssigkeit in Lösung geht, so daß Sensorleiter und Widerstandsleiter in Berührung miteinander kommen.

Es kann auch vorgesehen sein, daß eine Trennschicht zwischen dem zweiten und dem dritten Leiter vorgesehen ist, die unbenetzt elektrisch isolierend ist, jedoch mit der zu detektierenden Flüssigkeit eine chemische Reaktion eingeht, so daß sie elektrisch leitfähig wird und eine Anzeige ermöglicht.

Zum Aufbau eines runden Verseilelementes können zusätzlich eine Beilauftrense und eine zentrale Trense vorgesehen sein.

Des gleichen können über die Kabelelemente und gegebenenfalls über die Trensen eine flüssigkeitsdurchlässige, isolierende Umhüllung aufgebracht sein.

Als Umhüllung kann ein flüssigkeitsdurchlässiges Geflecht, ein Vlies oder ein perforierter Polymermantel vorgesehen sein.

Schließlich können neben den drei leitenden Kabelelementen weitere isolierte Adern zur Kabelbruchüberwachung oder zu Steuer- oder Meßzwecken angeordnet sein.

Generell besteht das Kabel also aus 2 Sensorelementen, einem isolierten Rückleiter und Aufbauelementen, die verhindern, daß sich die Sensoren berühren, bevor das Kabel mit der zu detektierenden Flüssigkeit benetzt wird. Wie schon ausgeführt, ist es denkbar, daß neben dem Rückleiter weitere isolierte Adern zur Kabelbruchüberwachung oder auch zu Steuer- und Meßzwecken eingebaut werden.

Die Sensorelemente haben folgenden Aufbau:
1. Kupferlitze,umspritzt mit einem leitfähigen Polymer.
2. Karbonfaser, umspritzt mit einem leitfähigen Polymer.

Dieser Widerstandsleiter, mit einem Widerstand von z. B. 130 Ohm/m, gestattet die Fehlerortsbestimmung mittels einer Meßbrücke. Als äußerer Schutz ist eine poröse Umhüllung aufgebracht, z. B. ein Geflecht, eine Vliesbandierung, ein perforierter Polymermantel oder dergleichen. Eine weitere Aufbauvariante stellt die koaxiale Anordnung der Leiter und Sensoren dar.

### Funktion:

Wird das Kabel partiell mit einer leitfähigen Flüssigkeit benetzt, kommt es zwischen den beiden Sensorelementen, Sensorleiter und Widerstandsleiter, zu einer indirekten Berührung. Der Übergangswiderstand ist dabei abhängig von der Benetzungslänge und der Leitfähigkeit der Flüssigkeit. Das Auftreten einer Leckage ist somit durch eine einfache Widerstandsmessung detektierbar. Der Fehlerort ist mittels einer Meßbrücke oder eine äquivalenten Meßeinrichtung zu bestimmen.

Eine Detektion von nicht leitfähigen Flüssigkeiten mit Kabeln, die nach dem Widerstandsprinzip arbeiten, kann folgendermaßen ablaufen:
Bei diesem Kabeltyp sind die beiden Sensorelemente, Sensorleiter und Widerstandsleiter durch eine Schicht getrennt, die folgende Eigenschaften aufweist:
Im Normalfall elektrisch isolierend, geht in der zu detektierenden Flüssigkeit in Lösung oder geht mit der zu detektierenden Flüssigkeit eine chemische Reaktion ein und wird dann elektrisch leitfähig.

In beiden genannten Fällen führt diese Änderung der Trennschicht zu einer gegenseitigen Berührung der Sensorelemente, bzw. zu einem elektrischen Kontakt zwischen diesen.

In der Zeichnung ist ein Ausführungsbeispiel der Erfindung dargestellt.

Figur 1 zeigt einen Schnitt durch ein erfindungsgemäßes rundes Kabel.

Figur 2 zeigt einen Schnitt durch ein Verseilelement mit drei zusätzlichen Steuer- oder Meßadern.

Mit 1 ist ein Verseilelement bezeichnet, das aus einer Kupferlitze 1a Dkb 24 x 0,20 mm 0,75 mm² besteht, einen Außendurchmesser von 1,08 mm aufweist und eine Schlaglänge von 40 mm in S-Drall. Als Isolierhülle 1b ist ein Polyäthylen mit einer Wandstärke von 0,5 mm aufgebracht, so daß sich ein Gesamtdurchmesser von 2,08 mm ergibt.

Mit 2 ist ein weiteres Verseilelement bezeichnet, das aus einer Kupferlitze 2a, wie zu 1 erläutert, besteht. Darauf ist eine Hülle 2b aus leitfähigem Polyäthylen Compound, z. B. Lupolen KR 1187/111, mit einer Wanddicke von 0,5 mm aufgebracht, so daß sich ebenfalls ein Außendurchmesser von 2,08 mm ergibt.

Mit 3 ist ein drittes Verseilelement bezeichnet, das aus einem Widerstandsleiter 3a mit 130 Ohm/m besteht. Hierzu ist eine Karbonfaser aus einem Garn mit 200 tex und ca. 200 Schlägen/m verwendet, so daß sich ein Durchmesser von 0,38 mm ergibt.

Darüber ist, wie zu 2 schon beschrieben, eine Hülle 3b aus leitfähigem Polyäthylen mit einer Wanddicke von 0,85 mm aufgebracht, so daß sich ebenfalls ein Außendurchmesser von 2,08 mm ergibt.

Mit 4 ist ein weiteres Verseilelement bezeichnet, das aus einer Polyäthylentrense als Beilauf mit einem Durchmesser von 2,08 mm besteht.

Mit 5 ist ein zentrales Verseilelement bezeichnet, das aus einer Polyäthylentrense mit einem Durchmesser von 0,85 mm besteht.

Die Verseilelemente 1 bis 5 sind zu einem Selenaufbau mit S-Drall und einer Schlaglänge von 100 mm verseilt.

Darüber ist ein offenes Geflecht 6 mit folgenden Kenndaten angebracht:

| | |
|---|---|
| - Einzeldurchmesser: | 0,7 mm Polyamiddraht |
| - Spulenzahl: | 24 |
| - Fachung: | 1 |
| - Flechten: | 9,3 |
| - Bedeckung: | 73,1 % |
| - Winkel: | 60,1 ° |

Daraus ergibt sich ein Gesamtdurchmesser von 7,81 mm.

Eine Alternative zu obengenanntem Geflecht hat folgende Kenndaten:

| | |
|---|---|
| - Polyamiddraht, Einzeldurchmesser: | 0,7 mm |
| - Spulenzahl: | 24 |
| - Fachung: | 1 |
| - Flechten: | 15,8 |
| - Bedeckung: | 49,8 % |
| - Winkel: | 45,6 ° |

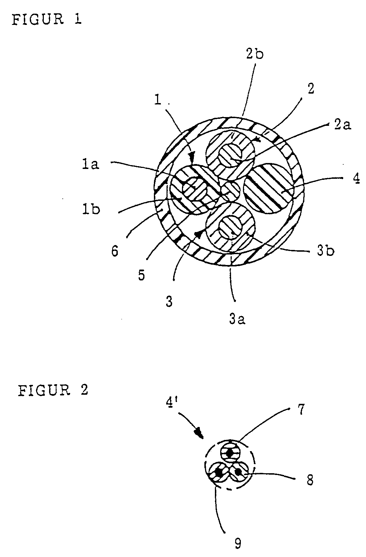

In Figur 2 ist ein Verseilelement 4' dargestellt, das an die Stelle des zur Figur 1 beschriebenen Verseilelementes 4 treten kann. Hier sind drei Adern 7, 8 und 9 miteinander verdrillt angeordnet, die zu Meß- oder Steuerzwecken dienen können.

## Patentansprüche

1. Kabel zur Ortung von Flüssigkeiten mittels elektrischer Widerstandsmessung, bei dem mindestens drei im wesentlichen längslaufende, elektrisch leitende Kabelelemente (1, 2, 3) angeordnet sind, von denen ein erstes als isolierter Speiseleiter (1), ein zweites als für die zu detektierende Flüssigkeit zugänglicher Sensorleiter (2) und ein drittes als für die zu detektierende Flüssigkeit zugänglicher Widerstandsleiter (3) ausgebildet ist, und bei dem der zweite und dritte Leiter (2, 3) durch ihre räumliche Zuordnung zueinander elektrisch isoliert voneinander angeordnet sind, jedoch dazwischen angeordnete Teile des Kabel für die zu detektierende Flüssigkeit leicht durchlässig sind, wobei der Sensorleiter (2) eine mit leitfähigem Polymer (2b) umspritzte Kupferlitze (2a) ist, dadurch gekennzeichnet, daß der Widerstandsleiter (3) als mit leitfähigem Polymer (3b) umspritzte Karbonfaser (3a) ausgebildet ist und die Karbonfaser (3a) aus einem Garn mit 200 tex und ca. 200 Schlägen/m besteht, so daß sich ein Garn-Durchmesser von 0,38 mm ergibt.

2. Kabel nach Anspruch 1, dadurch gekennzeichnet, daß eine Trennschicht zwischen dem zweiten und dem dritten Leiter vorgesehen ist, die unbenetzt elektrisch isolierend ist, jedoch in der zu detektierenden Flüssigkeit in Lösung geht.

3. Kabel nach Anspruch 1, dadurch gekennzeichnet, daß eine Trennschicht zwischen dem zweiten und dem dritten Leiter vorgesehen ist, die unbenetzt elektrisch isolierend ist, jedoch mit der zu detektierenden Flüssigkeit eine chemische Reaktion eingeht, so daß sie elektrisch leitfähig wird.

4. Kabel nach einem der Ansprüche 1 bis 3, dadurch gekennzeichnet, daß zusätzlich eine Beilauftrense (4) und eine zentrale Trense (5) zum Aufbau eines runden Verseilelementes vorgesehen sind.

5. Kabel nach einem der Ansprüche 1 bis 4, dadurch gekennzeichnet, daß über die Kabelelemente (1 bis 3) und ggf. die Trensen (4, 5) eine flüssigkeitsdurchlässige, isolierende Umhüllung (6) aufgebracht ist.

6. Kabel nach Anspruch 5, dadurch gekennzeichnet, daß die flüssigkeitsdurchlässige, isolierende Umhüllung (6) ein Geflecht, ein Vlies oder ein perforierter Polymermantel ist.

7. Kabel nach einem der Ansprüche 1 bis 6, dadurch gekennzeichnet, daß neben den drei leitenden Kabelelementen (1, 2, 3) weitere isolierte Adern (7, 8, 9) zur Kabelbruchüberwachung oder zu Steuer- bzw. Meßzwecken angeordnet sind.

## Claims

1. A cable for detecting liquids by means of electrical resistance measurement, in which at least three substantially longitudinal, electrically conductive cable elements (1, 2, 3) are arranged, of which the first is formed as an insulated feeder conductor (1), the second as a sensor conductor (2) accessible to the liquid to be detected, and the third as a resistance conductor (3) accessible to the liquid to be detected, and in which the second and third conductors (2, 3) are arranged so as to be electrically insulated from each other as a result of their spatial relationship with each other, although cable parts arranged therebetween are easily permeable by the liquid to be detected, wherein the sensor conductor (2) is a copper strand (2a) extrusion-coated with a conductive polymer (2b), characterised in that the resistance conductor (3) is formed as a carbon fibre (3a) extrusion-coated with a conductive polymer (3b), and the carbon fibre (3a) comprises a yarn of 200 tex and approximately 200 beats/m, resulting in a yarn diameter of 0.38 mm.

2. A cable according to claim 1, characterised in that a separating layer is provided between the second and third conductors and is electrically insulating when unwetted, but dissolves in the liquid to be detected.

3. A cable according to claim 1, characterised in that a separating layer is provided between the second and third conductors and is electrically insulating when unwetted, but reacts chemically with the liquid to be detected, with the result that it becomes electrically conductive.

4. A cable according to any one of claims 1 to 3, characterised in that a filler worm (4) and a central worm (5) are additionally provided for forming a round stranded element.

5. A cable according to any one of claims 1 to 4, characterised in that a liquid-permeable, insulating covering (6) is applied to the cable elements (1 to 3) and, if applicable, the worms (4, 5).

6. A cable according to claim 5, characterised in that the liquid-permeable, insulating covering (6) is a mesh, a non-woven fabric or a perforated polymer coat.

7. A cable according to any one of claims 1 to 6, characterised in that apart from the three conducting cable elements (1, 2, 3), further insulated wires (7, 8, 9) are arranged for cable break monitoring or for control or measuring purposes.

## Revendications

1. Câble de repérage de liquides par mesure de la résistance électrique, dans lequel sont disposés au moins trois éléments de câblage (1, 2, 3) électriquement conducteurs, s'étendant en substance longitudinalement et parmi lesquels un premier est conçu en tant que conducteur isolé d'alimentation (1), un deuxième est conçu en tant que conducteur de détection (2) accessible par le liquide à détecter, et un troisième est conçu en tant que conducteur résistif (3) accessible par le liquide à détecter ; et dans lequel les deuxième et troisième conducteurs (2, 3) sont agencés, du fait de leur assignation mutuelle dans l'espace, de manière à être électriquement isolés l'un de l'autre, tandis que des parties du câble situées entre ces conducteurs sont aisément perméables au liquide à détecter, le conducteur de détection (2) étant un toron de cuivre (2a) enrobé, par injection, d'un polymère conducteur (2b), caractérisé par le fait que le conducteur résistif (3) est réalisé sous la forme d'une fibre de carbone (3a) enrobée, par injection, d'un polymère conducteur (3b), et la fibre de carbone (3a) consiste en un fil de 200 tex et d'environ 200 tours/m, ce qui donne un diamètre du fil de 0,38 mm.

2. Câble selon la revendication 1, caractérisé par le fait qu'une couche de séparation, prévue entre les deuxième et troisième conducteurs, est électriquement isolante à l'état non mouillé, mais se dissout cependant dans le liquide à détecter.

3. Câble selon la revendication 1, caractérisé par le fait qu'une couche de séparation, prévue entre les deuxième et troisième conducteurs, est électriquement isolante à l'état non mouillé, mais entre cependant en réaction chimique avec le liquide à détecter, de sorte qu'elle devient électriquement conductrice.

4. Câble selon l'une des revendications 1 à 3, caractérisé par le fait qu'un guipage de bourrage (4) et un guipage central (5) sont additionnellement prévus pour former un élément de câblage rond.

5. Câble selon l'une des revendications 1 à 4, caractérisé par le fait qu'une enveloppe isolante (6) perméable aux liquides est déposée sur les éléments de câblage (1 à 3), et éventuellement sur les guipages (4, 5).

6. Câble selon la revendication 5, caractérisé par le fait que l'enveloppe isolante (6) perméable aux liquides est un tressage, un voile de carde ou une enveloppe en polymère perforée.

7. Câble selon l'une des revendications 1 à 6, caractérisé par le fait que des brins additionnels isolés (7, 8, 9) sont disposés à côté des trois éléments de câblage conducteurs (1, 2, 3), en vue de la surveillance d'une rupture du câble ou à des fins respectives de commande ou de mesurage.
